(19) Europäisches Patentamt / European Patent Office / Office européen des brevets

(11) **EP 3 273 412 B1**

(12) **EUROPEAN PATENT SPECIFICATION**

(45) Date of publication and mention
of the grant of the patent:
**02.09.2020 Bulletin 2020/36**

(21) Application number: **16764182.8**

(22) Date of filing: **08.03.2016**

(51) Int Cl.:
*G06T 17/00* (2006.01)      *G06T 15/20* (2011.01)
*G06T 7/55* (2017.01)       *G06K 9/46* (2006.01)

(86) International application number:
**PCT/CN2016/075837**

(87) International publication number:
**WO 2016/146001 (22.09.2016 Gazette 2016/38)**

(54) **THREE-DIMENSIONAL MODELLING METHOD AND DEVICE**

VERFAHREN UND VORRICHTUNG FÜR DREIDIMENSIONALE MODELLIERUNG

PROCÉDÉ ET DISPOSITIF DE MODÉLISATION TRIDIMENSIONNELLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.03.2015 CN 201510117117**

(43) Date of publication of application:
**24.01.2018 Bulletin 2018/04**

(73) Proprietor: **Alibaba Group Holding Limited
Grand Cayman (KY)**

(72) Inventor: **ZHANG, Jie
Hangzhou (CN)**

(74) Representative: **Conroy, John
Fish & Richardson P.C.
Highlight Business Towers
Mies-van-der-Rohe-Straße 8
80807 München (DE)**

(56) References cited:
**EP-A2- 1 510 973          WO-A1-2014/186970
CN-A- 1 940 996          CN-A- 101 320 485
CN-A- 101 404 091        CN-A- 101 877 143
CN-A- 102 054 291        CN-A- 102 663 820
US-A1- 2012 183 238      US-A1- 2013 100 256**

EP 3 273 412 B1

**Description**

The present application claims priority of the Chinese Patent Application No. 201510117117.2, filed on 17 March 2015 and entitled "THREE-DIMENSIONAL MODELING METHOD AND APPARATUS".

Technical Field

The present application relates to the technical field of computers and, in particular to a three-dimensional modeling method and apparatus.

Background Art

In the field of computer vision, three-dimensional modeling for an object based on 2D image data has been widely applied. Information included in a 2D image, such as light streams, shadows and texture, can all be used for determining the depth of an object, thereby constructing a three-dimensional model. However, the amount of calculation in acquiring a depth value by means of information, such as light streams, shadows and texture, is extremely large. Taking a mobile device such as a mobile phone as an example, a built-in processor has difficulty in performing real-time calculation on the information above, thereby limiting the application of some services or functions based on three-dimensional modeling on the mobile device such as a mobile phone.

On the other hand, if the amount of processing of information is reduced to accommodate the computation capability of the processor of a mobile device, such as a mobile phone, the accuracy of three-dimensional modeling may possibly be reduced.

US 2013/100256 A1 discloses methods and systems for generating a depth map. The method includes projecting an infrared dot pattern onto a scene, capturing stereo images from each of two or more synchronized infrared cameras, detecting a number of dots within the stereo images, computing a number of feature descriptors for the dots in the stereo images, and computing a disparity map between the stereo images.

EP 1 510 973 A2 discloses an apparatus and method for image-based 3D photorealistic head modeling. The method includes: detecting frontal and profile features in input frontal and profile images; generating a 3D head model by fitting a 3D genetic model using the detected facial features; generating a realistic texture from the input frontal and profile images; and mapping the texture onto the 3D head model.

WO 2014/186970 A1 discloses a method for generating a three- dimensional (3D) model.

Summary of the Invention

The present invention is defined by the claims. The embodiments of the present application provide a method and apparatus for generating a three-dimensional model of an object, in order to solve the problem of three-dimensional modeling in the prior art requiring a great amount of calculations which are not easily implemented on a mobile device, such as a mobile phone.

A method for generating a three dimensional model of an object is provided in an embodiment of the present application, comprising: respectively capturing a first image of an object from a first direction and a second image of the object from a second direction; identifying a plurality of feature points on the first image, wherein identifying the plurality of feature points comprises identifying multiple initial feature points on the first image, associating the first image with a pre-set first grid comprising multiple grid cells, calculating distances from the identified multiple initial feature points to centers of grid cells of the first grid in which the initial feature points are located, and determining, in the grid cells of the first grid, an initial feature point closest to the center of a grid cell where the initial feature point is located as a feature point, wherein if a grid cell of the first grid is devoid of an initial feature point, the center of the grid cell is determined as a feature point within the grid cell; determining, for each feature point in the identified plurality of feature points on the first image, a matching feature point on the second image that corresponds to the feature point in the identified plurality of feature points on the first image; calculating a plurality of values representing similarities between the plurality of feature points and the corresponding matching feature points, wherein each value in the calculated plurality of values represents a similarity between i) a respective feature point in the identified plurality of feature points on the first image and ii) a matching feature point on the second image that corresponds to the respective feature point; calculating, for each feature point in the identified plurality of feature points on the first image, a depth value of the feature point relative to a viewing plane, wherein calculating a depth values of a feature point comprises combining depth values of the feature point at an angle of elevation, angle of deflection, and angle of rotation; performing weighted calculations on the depth values of the plurality of feature points according to the plurality of values representing similarities between the plurality of feature points and the corresponding matching feature points, wherein performing weight calculations on the depth values of the plurality of feature points comprises calculating, for each of the plurality of feature points, a weighted depth value, wherein the weighted depth value comprises the calculated depth value of the feature point, multiplied by a sum of values representing similarities of all feature points in the plurality of feature points except the feature point, and divided by a sum of values representing similarities of all feature points; and generating a three-dimensional model of the object based on the calculated weighted depth values of the plurality of feature points.

An apparatus for generating a three dimensional model of an object is provided in an embodiment of the present application, comprising multiple modules configured to perform the method for generating a three dimensional model of an object described above.

The embodiments of the present application provide a three-dimensional modeling method and apparatus. The method involves: capturing images in at least two different directions of an object, acquiring feature points on one of the images, and determining corresponding matching feature points on the images in the remaining directions, so as to calculate depth values of the various feature points; and performing weighted calculation on the depth values of the various feature points with similarities between the feature points and the matching feature points, and performing three-dimensional modeling on the object by utilizing the depth values of the various feature points after being subjected to the weighted calculation, so that the method effectively reduces the amount of calculation of three-dimensional modeling, is easily implemented on a mobile device, such as a mobile phone, and has a relatively high accuracy.

Brief Description of the Drawings

The drawings described herein are used to provide further understanding of the present application, which constitute a part of the present application. The illustrative embodiments of the present application and the description thereof are used to explain the present application and do not constitute a limitation to the present application. In the drawings:

Fig. 1 is a schematic flow chart of three-dimensional modeling provided in an embodiment of the present application;
Fig. 2 is a flow chart of acquiring feature points provided in an embodiment of the present application;
Fig. 3 is a flow chart of determining matching feature points on a second image that correspond to feature points on a first image provided in an embodiment of the present application;
Fig. 4 is a flow chart of calculating similarities between feature points and matching feature points provided in an embodiment of the present application;
Fig. 5 is a schematic diagram of coordinates when a human face rotates by an angle $\alpha$ of elevation clockwise from the Y axis to the Z axis on a YZ plane provided in an embodiment of the present application;
Fig. 6 is a schematic diagram of coordinates when a human face rotates by an angle $\beta$ of deflection anti-clockwise from the X axis to the Z axis on an XZ plane provided in an embodiment of the present application;
Fig. 7 is a schematic diagram of coordinates when a human face rotates by an angle $\gamma$ of rotation anti-clockwise from the X axis to the Y axis on an XY plane provided in an embodiment of the present application;
Fig. 8 is a schematic diagram of initial feature points acquired on a first image provided in an embodiment of the present application;
Fig. 9 is a schematic diagram of screening initial feature points utilizing a first grid provided in an embodiment of the present application;
Fig. 10 is a schematic diagram of searching, on a second image, for a matching feature point A' corresponding to a feature point A on a first image provided in an embodiment of the present application;
Fig. 11 is a schematic flow chart of three-dimensional modeling provided in another embodiment of the present application;
Fig. 12 is a schematic diagram of a front face image, a front face elevated image, a front face left-inclined image and a front face right-inclined image of a human face captured utilizing a mobile phone provided in another embodiment of the present application; and
Fig. 13 is a schematic diagram of modules of a three-dimensional modeling apparatus provided in an embodiment of the present application.

Detailed Description of Embodiments

In order to make the object, technical solution and advantages of the present application more clear, the technical solution of the present application will be described clearly and completely in conjunction with particular embodiments of the present application and corresponding drawings hereinafter. Obviously, the described embodiments are merely some embodiments of the present application rather than all embodiments. Based on the embodiments of the present application, all other embodiments obtained by those of ordinary skill in the art without any inventive effort all fall within the scope of protection of the present application.

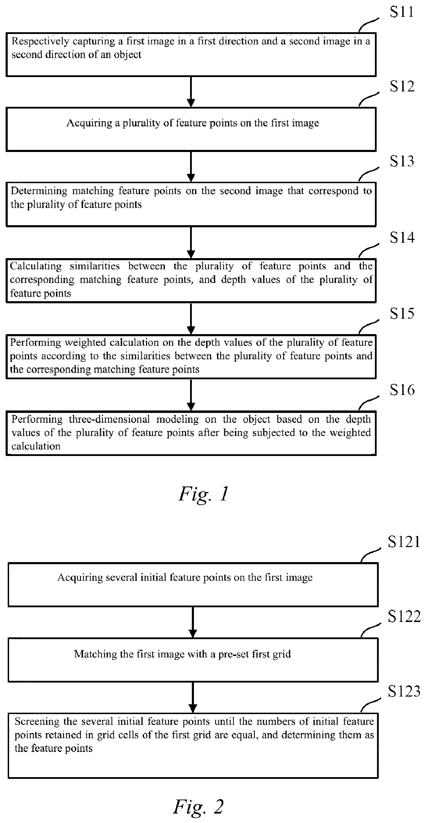

Fig. 1 is a process of three-dimensional modeling provided in an embodiment of the present application, specifically comprising the steps of:

S11: respectively capturing a first image in a first direction and a second image in a second direction of an object.

In the embodiment of the present application, the object comprises various objects having a three-dimensional construction, e.g., a human face. The first image and the second image may have specific differences in terms of angle of elevation, angle of deflection and angle of rotation from each other. Both the first image and the second image contain RGB channels (i.e., the first image and the second image are color images), and the pixels of both images are above $392 \times 440$. Of course, in substituted embodiments, the first image and the second image may also be grayscale maps.

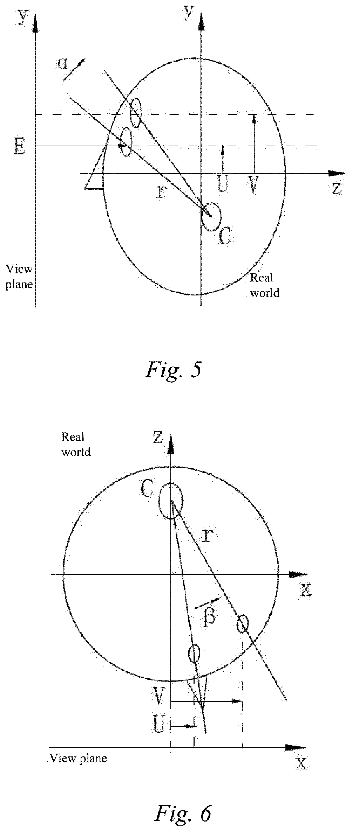

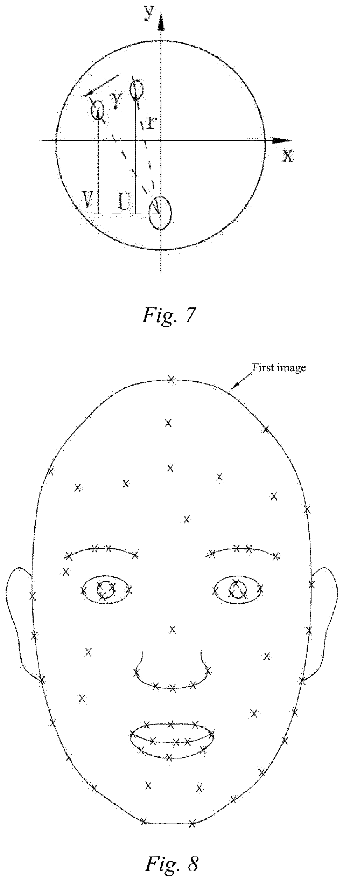

In cooperation with the reference to Figs. 5-7, taking a human face as an example, the angle of elevation, angle of deflection and angle of rotation as described in the present application are explained. Taking a front face image of the human face as a reference, the X axis is defined as a horizontal axis of the front face of the human face, the Y axis is defined as a vertical axis of the front face of the human face, while the Z axis is perpendicular to the X axis and the Y axis, and the Z axis indicates the depth of features on the human face. As shown in Fig. 5, the angle $\alpha$ of elevation is an angle for the human face to rotate clockwise from the Y axis to the Z axis on the YZ plane; as shown in Fig. 6, the angle $\beta$ of deflection is an angle for the human face to rotate anti-clockwise from the X axis to the Z axis on the XZ plane; and as shown in Fig. 7, the angle $\gamma$ of rotation is an angle for the human face to rotate anti-clockwise from the X axis to the Y axis on the XY plane.

S12: acquiring a plurality of feature points on the first image.

In the embodiment of the present application, the acquisition of the feature points may use the method of edge detection, so as to acquire points with significant changes in brightness in the first image. At the same time, image edge detection may greatly reduce the amount of processing of data, while retaining important structural attributes of the image, such as: discontinuity in depth, discontinuity in a surface direction, a material property change, a scenario illumination change.

With reference to Fig. 2, the steps of acquiring a plurality of feature points on the first image in step S12 are introduced, comprising:

S121: acquiring several initial feature points on the first image.

With reference to Fig. 8, the acquisition of the initial feature points (points indicated by cross marks in Fig. 8) herein uses the method of edge detection, and these initial feature points reflect feature profiles of edges, five sense organs on the human face.

S122: matching the first image with a pre-set first grid.

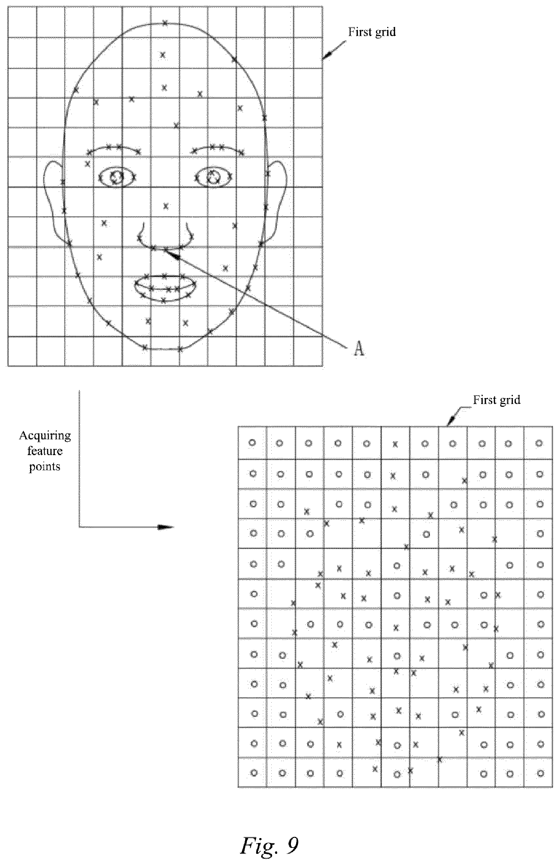

With reference to Fig. 9, in the embodiment of the present application, grid cells in the first grid are defined as squares, and of course the grid cells of the first grid may also be pre-defined as a plurality of shapes such as a triangle or a regular hexagon according to requirements. By means of this step, the several initial feature points on the first image may respectively fall into various grid cells of the first grid. It needs to be noted that in practical application scenarios, for example, in a mobile phone, the matching of the first image and the first grid is accomplished by operation processing of a data processor within the mobile phone, rather than being necessarily fed back visually.

S123: screening the several initial feature points until the numbers of initial feature points retained in grid cells of the first grid are equal, and determining them as the feature points.

Still taking a human face as an example, since the features thereon are not distributed uniformly, when edge detection is utilized to acquire the initial feature points, the distribution of initial feature points in some regions on the first image may obviously be more intensive relative to the other regions. However, in applications of a mobile device, e.g., a mobile phone, performing depth calculation on all of these acquired initial feature points is obviously hard to achieve and unnecessary. Utilizing a first grid to screen these initial feature points may ensure that the initial feature points after screening can still reflect basic shapes of the human face, while the amount of calculation of data is greatly reduced.

It needs to be noted that although in this embodiment, the standard is to ensure that the numbers of initial feature points retained in the grid cells of the first grid are equal to screen the several initial feature points, in some substituted embodiments, other screening standards may also be used, for example: setting that the difference between numbers of initial feature points in various grid cells is not greater than a pre-determined threshold.

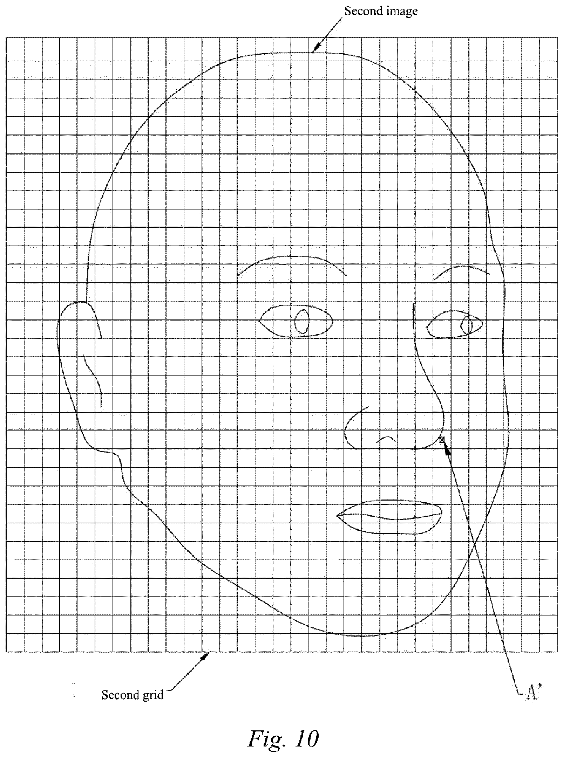

With reference to Fig. 10, in the embodiment of the present application, the specific screening process for the initial feature points is as follows: first, calculating the distances from the several initial feature points to centers of the grid cells of the first grid where these points are located, and then determining, in the grid cells of the first grid, an initial feature point closest to the center of the grid cell where this point is located as the feature point. In this process, a case where certain grid cells of the first grid are devoid of initial feature points may arise, and in this case, the centers of these grid cells (points indicated by hollow circles in Fig. 10) are determined as feature points therein.

Of course, in some substituted embodiments, the average values of the coordinates of the initial feature points of the various grid cells may also be solved, and the points corresponding to the obtained average coordinate values are taken as feature points retained in the corresponding grid cells in the first grid.

S13: determining matching feature points on the second image that correspond to the plurality of feature points.

In cooperation with reference to Figs. 9 and 10, still taking a human face as an example, assuming that a feature point A at the tip of the nose is acquired on the first image, then the objective of step 13 is to search for the position where the tip of the nose is located (i.e., the coordinates of a matching feature point A') on the second image, and then establish a correlation between a plurality of feature points and matching feature points on the first image and the second image according to this method.

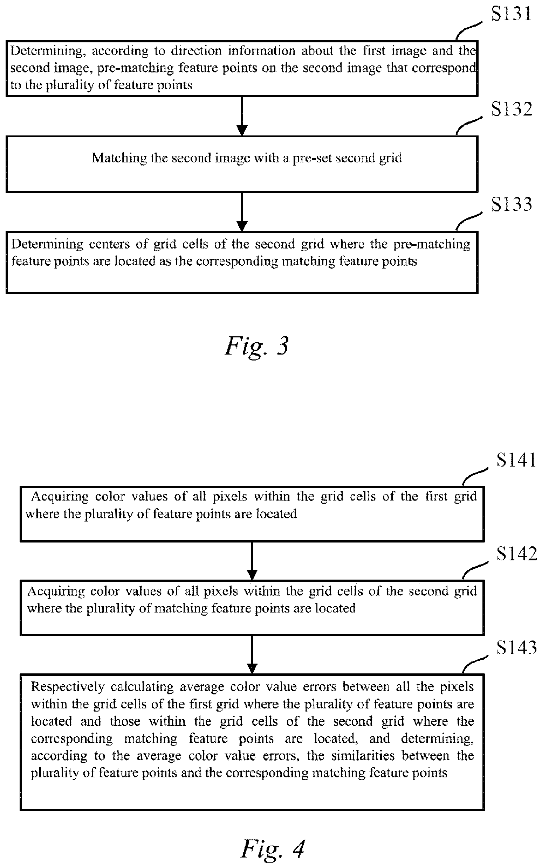

With reference to Fig. 3, the specific steps of determining matching feature points in step S13 are introduced, comprising:

S131: determining, according to direction information about the first image and the second image, pre-matching feature points on the second image that correspond to the plurality of feature points.

The direction information about the first image and the second image may be determined by a plurality of means. Taking shooting a human face by a mobile phone as an example:

in one embodiment, if a camera is utilized to continuously capture the first image and the second image, then direction information about the first image and the second image may be directly determined by means of a movement sensor (such as a gyroscope, a compass, an accelerometer) built in the mobile phone.

Continuously referring to Figs. 5-7, in another embodiment, if a camera is utilized to respectively capture the first image and the second image, direction information about the first image and the second image may be determined, for example, by means of a posture measurement algorithm. Specifically, assuming that the rotation of the human face is determined based on an assumed rotation center C, by means of the existing biological anatomy knowledge, the coordinates $C_X$, $C_Y$ and $C_Z$ of the rotation center can be roughly estimated, while the distance r from the rotation center C to the center of the two eyes on the human face can be used to measure the angle $\alpha$ of elevation, angle $\beta$ of deflection and angle $\gamma$ of rotation described above. At the same time, based on the following values which can be roughly estimated: the coordinates $(U_X, U_Y)$ on the first image and the coordinates $(V_X, V_Y)$ on the second image of the position of the center of the two eyes of the human face and the depth $E_Z$ of the position of the center of the two eyes when the human face is a front face image, the calculation formulas for the angle $\alpha$ of elevation, angle $\beta$ of deflection and angle $\gamma$ of rotation can be obtained as follows:

$$\alpha = \sin^{-1}\left(\frac{V_Y - C_Y}{r}\right) - \sin^{-1}\left(\frac{U_Y - C_Y}{r}\right)$$

angle of elevation, where $r = \sqrt{(U_Y - C_Y)^2 + (E_Z - C_Z)^2}$;

$$\beta = \sin^{-1}\left(\frac{V_X - C_X}{r}\right) - \sin^{-1}\left(\frac{U_X - C_X}{r}\right)$$

angle of deflection, where $r = \sqrt{(U_X - C_X)^2 + (E_Z - C_Z)^2}$; and

$$\gamma = \tan^{-1}\left(\frac{V_Y}{-V_X}\right) - \tan^{-1}\left(\frac{U_Y}{-U_X}\right)$$

angle of rotation.

S132: matching the second image with a pre-set second grid.

With reference to Fig. 10, similar to the first grid, in the embodiment of the present application, squares are used as the grid cells of the second grid. In addition, the area of the grid cells of the second grid is set as being smaller than that of the grid cells of the first grid (that is: in the first grid and the second grid of the same area, more grid cells relative to the first grid are divided in the second grid cells), so as to improve the accuracy of determining the matching feature points in the following step.

S133: determining centers of grid cells of the second grid where the pre-matching feature points are located as the corresponding matching feature points.

S14: calculating similarities between the plurality of feature points and the corresponding matching feature points and depth values of the plurality of feature points.

With reference to Fig. 4, the specific steps of calculating similarities between the feature points and the matching feature points in step S14 are introduced, comprising:

S141: acquiring color values of all pixels within the grid cells of the first grid where the plurality of feature points are located.

S142: acquiring color values of all pixels within the grid cells of the second grid where the plurality of matching feature points are located.

The "color values" as described in step S141 and step S142 refer to color values of pixels in three channels, R, G and B.

S143: respectively calculating average color value errors between all the pixels within the grid cells of the first grid where the plurality of feature points are located and those within the grid cells of the second grid where the corresponding matching feature points are located, and determining, according to the average color value errors, the similarities between the plurality of feature points and the corresponding matching feature points. The calculation formula for the average color value error S is as follows:

$$S = \lambda \sum_i \sum_j \frac{R(F_{ij}, S_{ij}) + G(F_{ij}, S_{ij}) + B(F_{ij}, S_{ij})}{3\|F\|},$$

where i and j are coordinate values of pixels within grid cells of the first grid, $F_{ij}$ is a feature point where a pixel is at a position of (i, j), $S_{ij}$ is a matching feature point where a pixel is at a position of (i, j), $R(F_{ij}, S_{ij})$ is an absolute value of the difference between the points $F_{ij}$ and $S_{ij}$ on the R channel, $G(F_{ij}, S_{ij})$ is an absolute value of the difference between the points $F_{ij}$ and $S_{ij}$ on the G channel, $B(F_{ij}, S_{ij})$ is an absolute value of the difference between the points $F_{ij}$ and $S_{ij}$ on the B channel, $\|F\|$ is the area of the grid cells of the first grid (i.e.,: the pixel values contained within the grid cells of the first grid), and $\lambda$ is a constant, and the calculation formula is as follows:

$$\lambda = (1 + \frac{|sp.x - fp.x|}{\max X} + \frac{|sp.y - fp.y|}{\max Y}),$$

where maxX and maxY are the farthest distance values (in pixels) away from the corresponding feature points within one grid cell of the first grid; and fp.x and fp.y are coordinate values of the feature points, and sp.x and sp.y are coordinate values of the matching feature points.

The similarities between the feature points and the matching feature points are determined according to the values of average color value errors obtained through calculation, and the greater the average color value error, the lower the similarity between a feature point and a matching feature point. The feature points can be screened by utilizing the similarities between the feature points and the matching feature points. Specifically:

first determining a discard threshold according to the similarities between the plurality of feature points and the corresponding matching feature points, and then screening out, from the plurality of feature points, feature points of which similarities with the corresponding matching feature points are less than the discard threshold. When the similarity between a feature point and the corresponding matching feature point is less than the discard threshold, it is indicated that the matching feature point at this time is not a point actually corresponding to the feature point on the second image, and it is determined that the feature point matching has failed at this time, while these feature points which have failed in matching do not participate in subsequent three-dimensional modeling calculation.

Continuously referring to Figs. 5-7, the depth value of a feature point is obtained by synthesizing the depths of the matching feature point at an angle of elevation, angle of deflection and angle of rotation, and performing calculation in combination with the depth values at these different angles may enable the angles to have a greater influence, and improve the accuracy of the depth value calculation result. Specifically,

the depth value of a feature point at an angle of elevation is $Z_\alpha = C_Z - \frac{(V_Y - C_Y) - (U_Y - C_Y)\cos\alpha}{\sin\alpha}$ ; the depth

value of a feature point at an angle of deflection is $Z_\beta = C_Z - \frac{(V_X - C_X) - (U_X - C_X)\cos\beta}{\sin\beta}$ ; and

the depth value of a feature point at an angle of rotation is $Z_\gamma = U_Y\cos\gamma - U_X\sin\gamma$, and

the calculation formula of the depth value Z is obtained by synthesizing $Z_\alpha$, $Z_\beta$ and $Z_\gamma$ as follows:

$$Z = Z_\alpha \frac{\sin\alpha}{\sin\alpha + \sin\beta + \sin\gamma} + Z_\beta \frac{\sin\beta}{\sin\alpha + \sin\beta + \sin\gamma} + Z_\gamma \frac{\sin\gamma}{\sin\alpha + \sin\beta + \sin\gamma}.$$

S15: performing weighted calculation on the depth values of the plurality of feature points according to the similarities between the plurality of feature points and the corresponding matching feature points.

Specifically, a formula to perform weighted calculation on depth values of the feature points is as follows:

$$\text{weighted depth value} = \text{depth value } Z \times (\text{sum of the average color value errors}$$
$$\text{of all the feature points except the feature points to be subjected to the weighted}$$
$$\text{calculation} \;/\; \text{sum of the average color value errors of all the feature points}).$$

S16: performing three-dimensional modeling on the object based on the depth values of the plurality of feature points after being subjected to the weighted calculation.

In the embodiment of the present application, the three-dimensional modeling adopts a triangular grid, and vertices of the triangular grid are respective feature points. Of course, in other substituted embodiments, a method, e.g., polygon modeling, may also be used.

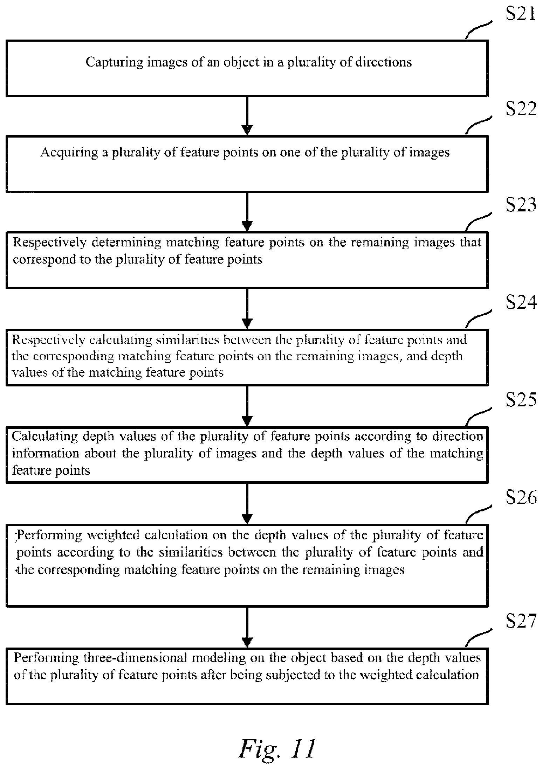

Fig. 11 is a process of three-dimensional modeling provided in another embodiment of the present application, specifically comprising the steps of:

S21: capturing images of an object in a plurality of directions.
S22: acquiring a plurality of feature points on one of the plurality of images.
S23: respectively determining matching feature points on the remaining images that correspond to the plurality of feature points.
S24: respectively calculating similarities between the plurality of feature points and the corresponding matching feature points on the remaining images and depth values of these matching feature points.
S25: calculating depth values of the plurality of feature points according to direction information about the plurality of images and the depth values of the matching feature points.
S26: performing weighted calculation on the depth values of the plurality of feature points according to the similarities between the plurality of feature points and the corresponding matching feature points on the remaining images.
S27: performing three-dimensional modeling on the object based on the depth values of the plurality of feature points after being subjected to the weighted calculation.

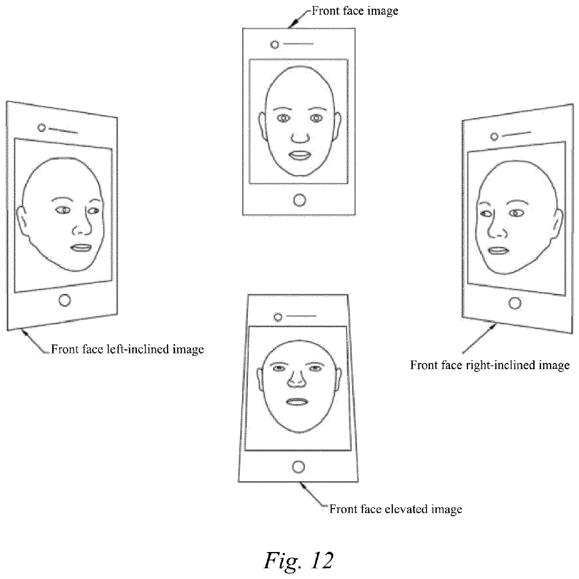

With reference to Fig. 12, still taking using a mobile phone to perform three-dimensional modeling on a human face as an example, a first image of the object in a reference direction and a second image, a third image and a fourth image in three directions deviating from the reference direction are captured. In addition, the first image, second image, third image and fourth image are respectively a front face image, a front face elevated image, a front face left-inclined image and a front face right-inclined image of the human face. In this way, matching feature points corresponding to the feature points captured on the front face image of the human face can all be substantially found on at least one of the front face elevated image, front face left-inclined image and front face right-inclined image, and therefore the calculation process for the depth value of each feature point on the front face image of the human face has synthesized the factor of angles, thereby ensuring that the depth value obtained through calculation has a higher accuracy.

In this embodiment, the three-dimensional modeling method in the present application is described taking capturing four images as an example, but this is not a limitation, and according to specific environments of application and the difference of precision requirements, the number of captured images may also be adjusted adaptively. In addition, since this embodiment does not involve improvements for other steps of the last embodiment, those steps will not be described otherwise herein, and the method and apparatus described in detail in the last embodiment may both be applied in this embodiment in its entirety.

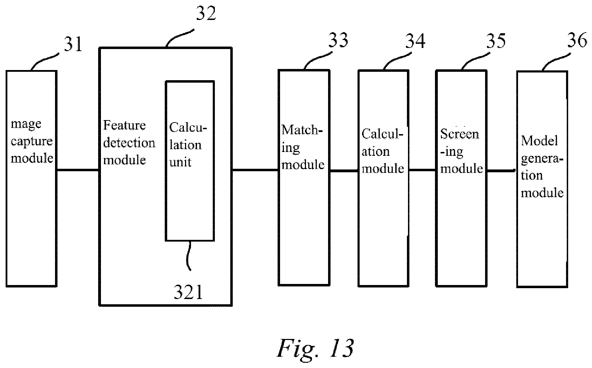

Fig. 13 is a schematic diagram of modules of a three-dimensional modeling apparatus provided in an embodiment of the present application, specifically comprising:

an image capture module 31 for respectively capturing a first image in a first direction and a second image in a second direction of an object;
a feature detection module 32 for acquiring a plurality of feature points on the first image;
a matching module 33 for determining matching feature points on the second image that correspond to the plurality of feature points;
a calculation module 34 for calculating similarities between the plurality of feature points and the corresponding matching feature points and depth values of the plurality of feature points, and performing weighted calculation on the depth values of the plurality of feature points according to the similarities between the plurality of feature points and the corresponding matching feature points; and
a model generation module 36 for performing three-dimensional modeling on the object based on the depth values of the plurality of feature points after being subjected to the weighted calculation.

In the embodiment of the present application, the feature detection module 32 is specifically used for: acquiring several initial feature points on the first image, matching the first image with a pre-set first grid, and screening the several initial feature points until the numbers of initial feature points retained in grid cells of the first grid are equal, and determining them as the feature points.

In the embodiment of the present application, the feature detection module 32 comprises a calculation unit 321, and the calculation unit 321 is specifically used for: calculating distances from the several initial feature points to centers of the grid cells of the first grid where these points are located; and the feature detection module 32 is specifically used for determining, in the grid cells of the first grid, an initial feature point closest to the center of the grid cell where this point is located as the feature point.

In the embodiment of the present application, the feature detection module 32 is further used for: when a grid cell of the first grid is devoid of the initial feature points, determining the center of the grid cell as a feature point within the grid cell.

In the embodiment of the present application, the matching module 33 is specifically used for: determining, according to direction information about the first image and the second image, pre-matching feature points on the second image that correspond to the plurality of feature points, matching the second image with a pre-set second grid, and determining centers of grid cells of the second grid where the pre-matching feature points are located as the corresponding matching feature points.

In the embodiment of the present application, the calculation module 34 is specifically used for: acquiring color values of all pixels within the grid cells of the first grid where the plurality of feature points are located, acquiring color values of all pixels within the grid cells of the second grid where the plurality of matching feature points are located, and respectively calculating average color value errors between all the pixels within the grid cells of the first grid where the plurality of feature points are located and those within the grid cells of the second grid where the corresponding matching feature points are located, and determining, according to the average color value errors, the similarities between the plurality of feature points and the corresponding matching feature points.

In the embodiment of the present application, a formula for performing weighted calculation on the depth values of the plurality of feature points according to the similarities between the plurality of feature points and the corresponding matching feature points is as follows:

$$\text{weighted depth value} = \text{depth value } Z \times (\text{sum of the average color value errors}$$
$$\text{of all the feature points except the feature points to be subjected to the weighted}$$
$$\text{calculation} / \text{sum of the average color value errors of all the feature points}).$$

In the embodiment of the present application, the area of the grid cells of the second grid is smaller than the area of the grid cells of the first grid.

In the embodiment of the present application, the apparatus further comprises a screening module 35 for, prior to performing the weighted calculation on the depth values of the plurality of feature points, screening the plurality of feature points according to the similarities between the plurality of feature points and the corresponding matching feature points.

In the embodiment of the present application, the screening module 35 is specifically used for: first determining a discard threshold according to the similarities between the plurality of feature points and the corresponding matching feature points, and then screening out, from the plurality of feature points, feature points of which similarities with the corresponding matching feature points are greater than the discard threshold.

In the embodiment of the present application, the model generation module 36 performs three-dimensional modeling on the object by adopting a triangular grid.

Continuously referring to Fig. 13, in another embodiment of the three-dimensional modeling apparatus of the present application, the apparatus comprising:

an image capture module 31 for capturing images of an object in a plurality of directions;
a feature detection module 32 for acquiring a plurality of feature points on one of the plurality of images;
a matching module 33 for respectively determining matching feature points on the remaining images that correspond to the plurality of feature points;
a calculation module 34 for respectively calculating similarities between the plurality of feature points and the corresponding matching feature points on the remaining images and depth values of the matching feature points, calculating depth values of the plurality of feature points according to direction information about the plurality of images and the depth values of the matching feature points, and performing weighted calculation on the depth values of the plurality of feature points according to the similarities between the plurality of feature points and the corresponding matching feature points on the remaining images; and

a model generation module 36 for performing three-dimensional modeling on the object based on the depth values of the plurality of feature points after being subjected to the weighted calculation.

In the embodiment of the present application, the image capture module 31 is specifically used for: capturing a first image of the object in a reference direction and a second image, a third image and a fourth image in three directions deviating from the reference direction.

In the embodiment of the present application, the object comprises: a human face.

In the embodiment of the present application, the first image, second image, third image and fourth image are respectively a front face image, a front face elevated image, a front face left-inclined image and a front face right-inclined image of the human face.

The embodiments of the present application provide a three-dimensional modeling method and apparatus. The method involves: capturing images in at least two different directions of an object, acquiring feature points on one of the images, and determining corresponding matching feature points on the images in the remaining directions, so as to calculate depth values of the various feature points; and performing weighted calculation on the depth values of the various feature points with similarities between the feature points and the matching feature points, and performing three-dimensional modeling on the object by utilizing the depth values of the various feature points after being subjected to the weighted calculation, so that the method effectively reduces the amount of calculation of three-dimensional modeling, is easily implemented on a mobile device such as a mobile phone, and has a relatively high accuracy.

It shall be understood by those skilled in the art that the embodiments of the present invention may be provided as methods, systems, or computer program products. Therefore, the present invention may adopt hardware only embodiments, software only embodiments, or embodiments with a combination of software and hardware. Moreover, the present invention may adopt the form of a computer program product that is implemented on one or more computer-usable storage mediums (including but not limited to a disk memory, a CD-ROM, an optical memory, and the like) that include computer-usable program code.

The present invention is described by referring to the flow charts and/or block diagrams of the methods, devices (systems) and computer program products according to the embodiments of the present invention. It should be understood that each flow and/or block in the flow charts and/or block diagrams and any combination of the flows and/or blocks in the flow charts and/or block diagrams may be implemented with computer program instructions. These computer program instructions may be provided to a processor of a general-purpose computer, a dedicated-purpose computer, an embedded processor or other programmable data processing devices to generate a machine, so that the instructions executed by the processor of a computer or other programmable data processing devices generate a means for implementing the functions specified in one or more flows of the flowcharts and/or one or more blocks of the block diagrams.

These computer program instructions may also be stored in a computer-readable memory which may guide a computer or other programmable data processing devices to operate in a specific manner, so that the instructions stored in the computer-readable memory generate an article of manufacture including an instruction means which can implement the functions specified in one or more flows of the flowcharts and/or one or more blocks of the block diagrams.

These computer program instructions may also be loaded in a computer or other programmable data processing devices, so that a series of operation steps are executed by the computer or other programmable devices to realize computer-implemented processing and thus the instructions executed by the computer or other programmable devices provide steps for implementing the functions specified in one or more flows of the flow charts and/or one or more blocks of the block diagrams.

In a typical configuration, a computing device includes one or more processors (CPUs), an input/output interface, a network interface and a memory.

The memory may include a non-permanent memory, a random access memory (RAM) and/or a non-volatile memory (such as a read-only memory (ROM) or flash memory (flash RAM)) and so on in computer-readable mediums. The memory is an example of the computer-readable mediums.

The computer-readable mediums comprise permanent and non-permanent, removable and non-removable media and may realize information storage with any method or technology. The information may be a computer-readable instruction, data structure, program module or other data. The examples of computer storage mediums include but are not limited to a phase change memory (PRAM), static random access memory (SRAM), dynamic random access memory (DRAM), other types of random access memories (RAMs), read-only memory (ROM), electrically erasable programmable read-only memory (EEPROM), flash memory or other memory technologies, compact disk read-only memory (CD-ROM), digital versatile disc (DVD) or other optical storage, magnetic cassette tape, magnetic tape and magnetic disk storage or other magnetic storage devices or any other non-transmission mediums, which can be used to store information that can be accessed by a computing device. According to the definition herein, the

computer-readable mediums do not include transitory computer-readable media, such as modulated data signals and carriers.

It also needs to be noted that the terms "comprising", "including" or any other variations thereof are intended to cover non-exhaustive inclusion, so that processes, methods, merchants or devices including a series of elements not only include those elements but also include other elements which are not listed expressly or include all inherent elements of such processes, methods, merchants or devices. If no more limitations are made, an element limited by "comprising a/an..." does not exclude other identical elements existing in the process, the method, the merchant, or the device which includes the element.

It shall be understood by those skilled in the art that the embodiments of the present application may be provided as methods, systems or computer program products. Thus, the present application may adopt full hardware embodiments, full software embodiments, or embodiments which combine software and hardware. Moreover, the present application may adopt the form of a computer program product that is implemented on one or more computer-usable storage mediums (including but not limited to a disk memory, a CD-ROM, an optical memory, and the like) that include computer usable program codes.

The foregoing is merely the embodiments of the present application and is not intended to limit the present application. For those skilled in the art, various changes and variations may be made to the present application. Modifications, equivalent replacements, improvements made within the principles of the present application shall all be contained in the scope of the claims of the present application.

**Claims**

1. A method for generating a three dimensional model of an object, **characterized in that** the method comprises:

respectively capturing a first image of an object (S11) from a first direction and a second image of the object (S11) from a second direction;
identifying a plurality of feature points on the first image (S12), wherein identifying the plurality of feature points comprises

identifying multiple initial feature points on the first image (S121),
associating the first image with a pre-set first grid comprising multiple grid cells (S 122),
calculating distances from the identified multiple initial feature points to centers of grid cells of the first grid in which the initial feature points are located, and
determining, in each of the grid cells of the first grid, an initial feature point closest to the center of a grid cell in which the initial feature point is located as a feature point, wherein if a grid cell of the first grid is devoid of an initial feature point, the center of the grid cell is determined as a feature point within the grid cell;

determining, for each feature point in the identified plurality of feature points on the first image, a matching feature point on the second image that corresponds to the feature point in the identified plurality of feature points on the first image (S13);
calculating a plurality of values representing similarities between the plurality of feature points and the corresponding matching feature points, wherein each value in the calculated plurality of values represents a similarity between i) a respective feature point in the identified plurality of feature points on the first image and ii) a matching feature point on the second image that corresponds to the respective feature point;
calculating, for each feature point in the identified plurality of feature points on the first image, a depth value of the feature point relative to a viewing plane, wherein calculating a depth value of a feature point comprises combining depth values of the feature point at an angle of elevation, angle of deflection, and angle of rotation (S14);
performing weighted calculations on the depth values of the plurality of feature points according to the plurality of values representing similarities between the plurality of feature points and the corresponding matching feature points (S15), wherein performing weighted calculations on the depth values of the plurality of feature points comprises calculating, for each of the plurality of feature points, a weighted depth value, wherein the weighted depth value comprises the calculated depth value of the feature point, multiplied by a sum of values representing similarities of all feature points in the plurality of feature points except the feature point, and divided by a sum of values representing similarities of all feature points; and
generating a three-dimensional model of the object based on the calculated weighted depth values of the plurality of feature points (S16).

2. The method of claim 1, **characterized in that** determining, for each feature point in the identified plurality of feature points on the first image, a matching feature point on the second image that corresponds to the feature point in the identified plurality of feature points on the first image comprises:

determining, for each feature point in the identified plurality of feature points on the first image, and according to direction information about the first image and the second image, a pre-matching feature point on the second image that corresponds to the feature point in the identified plurality of feature points on the first image (S131); matching the second image with a pre-set second grid (S132); and determining, for each pre-matching feature point, a center of a grid cell of the second grid where the pre-matching feature point is located as the corresponding matching feature point (S133).

3. The method of claim 2, **characterized in that** calculating a plurality of values representing similarities between the plurality of feature points and the corresponding matching feature points comprises:

determining color values of all pixels within the grid cells of the first grid where the identified plurality of feature points are located (S141); determining color values of all pixels within the grid cells of the second grid where the determined matching feature points are located (S142); and calculating, for each feature point in the identified plurality of feature points on the first image, an average color value error between i) all the pixels within the grid cell of the first grid where the feature point in the identified plurality of feature points is located and ii) all the pixels within the grid cell of the second grid where the matching feature point that corresponds to the feature point in the identified plurality of feature points is located; and determining, according to the average color value errors, the plurality of values representing similarities between the plurality of feature points and the corresponding matching feature points (S143).

4. The method of claim 3, **characterized in that** a formula for performing a weighted calculation on a depth value of a feature point in the identified plurality of feature points according to the plurality of values representing similarities between the plurality of feature points and the corresponding matching feature points comprises:

weighted depth value = depth value x (sum of the average color value errors of all the feature points except the feature point to be subjected to the weighted calculation/ sum of the average color value errors of all the feature points).

5. The method of any one of claims 2 to 4, **characterized in that** the area of the grid cells of the second grid is less than the area of the grid cells of the first grid.

6. The method of claim 1, **characterized in that** the method further comprises:
prior to performing the weighted calculation on the depth values of the plurality of feature points, discarding one or more feature points in the plurality of feature points according to the similarities between the plurality of feature points and the corresponding matching feature points.

7. The method of claim 6, **characterized in that** discarding one or more feature points in the plurality of feature points according to the similarities between the plurality of feature points and the corresponding matching feature points comprises:

determining a discard threshold according to the similarities between the plurality of feature points and the corresponding matching feature points; and discarding, from the plurality of feature points, feature points of which similarities with the corresponding matching feature points are less than the discard threshold.

8. The method of claim 1, **characterized in that** the method adopts a triangular grid.

9. The method of claim 1, wherein the method is implemented on a mobile device such as a mobile phone.

10. An apparatus for generating a three dimensional model of an object, **characterized in that** the apparatus comprises multiple modules configured to perform the method of any one of claims 1 to 9.

**Patentansprüche**

1. Verfahren zum Erzeugen eines dreidimensionalen Modells eines Objekts, das **dadurch gekennzeichnet ist, dass** das Verfahren umfasst:

   Erfassen jeweils eines ersten Bildes eines Objekts (S11) aus einer ersten Richtung und eines zweiten Bildes des Objekts (S11) aus einer zweiten Richtung;
   Identifizieren einer Vielzahl von Merkmalspunkten auf dem ersten Bild (S12), wobei das Identifizieren der Vielzahl von Merkmalspunkten das Identifizieren mehrerer anfänglicher Merkmalspunkte auf dem ersten Bild (S121) umfasst, wobei das erste Bild einem voreingestellten ersten Gitter zugeordnet wird, das mehrere Gitterzellen umfasst (S122), Berechnen von Abständen von den identifizierten mehreren anfänglichen Merkmalspunkten zu Zentren von Gitterzellen des ersten Gitters, in denen sich die anfänglichen Merkmalspunkte befinden, und Bestimmen eines Anfangsmerkmalspunkts, der am nächsten liegt, in jeder der Gitterzellen des ersten Gitters zum Zentrum einer Gitterzelle, in der sich der anfängliche Merkmalspunkt als Merkmalspunkt befindet, wobei, wenn eine Gitterzelle des ersten Gitters keinen anfänglichen Merkmalspunkt aufweist, das Zentrum der Gitterzelle als ein Merkmalspunkt innerhalb der Gitterzelle bestimmt wird;
   Bestimmen, für jeden Merkmalspunkt in der identifizierten Vielzahl von Merkmalspunkten auf dem ersten Bild, eines übereinstimmenden Merkmalspunkts auf dem zweiten Bild, der dem Merkmalspunkt in der identifizierten Vielzahl von Merkmalspunkten auf dem ersten Bild (S13) entspricht;
   Berechnen einer Vielzahl von Werten, die Ähnlichkeiten zwischen der Vielzahl von Merkmalspunkten und den entsprechenden übereinstimmenden Merkmalspunkten darstellen, wobei jeder Wert in der berechneten Vielzahl von Werten eine Ähnlichkeit zwischen i) einem jeweiligen Merkmalspunkt in der identifizierten Vielzahl von Merkmalspunkten auf dem ersten Bild und ii) einem übereinstimmenden Merkmalspunkt auf dem zweiten Bild, der dem jeweiligen Merkmalspunkt entspricht, darstellt;
   Berechnen eines Tiefenwerts des Merkmalspunkts relativ zu einer Betrachtungsebene für jeden Merkmalspunkt in der identifizierten Vielzahl von Merkmalspunkten auf dem ersten Bild, wobei das Berechnen eines Tiefenwerts eines Merkmalspunkts das Kombinieren von Tiefenwerten des Merkmalspunkts an einem Elevationswinkel, Ablenkwinkel und Drehwinkel (S14) umfasst;
   Durchführen gewichteter Berechnungen an den Tiefenwerten der Vielzahl von Merkmalspunkten gemäß der Vielzahl von Werten, die Ähnlichkeiten zwischen der Vielzahl von Merkmalspunkten und den entsprechenden übereinstimmenden Merkmalspunkten darstellen (S15), wobei das Durchführen gewichteter Berechnungen an den Tiefenwerten der Vielzahl von Merkmalspunkten das Berechnen eines gewichteten Tiefenwerts für jeden der mehreren Merkmalspunkte umfasst, wobei der gewichtete Tiefenwert den berechneten Tiefenwert des Merkmalspunkts multipliziert mit einer Summe von Werten umfasst, die Ähnlichkeiten aller Merkmalspunkte in der Vielzahl von Merkmalspunkten mit Ausnahme des Merkmalspunkts darstellen, und geteilt durch eine Summe von Werten, die Ähnlichkeiten aller Merkmalspunkte darstellen; und
   Erzeugen eines dreidimensionalen Modells des Objekts basierend auf den berechneten gewichteten Tiefenwerten der Vielzahl von Merkmalspunkten (S16).

2. Verfahren nach Anspruch 1, **dadurch gekennzeichnet, dass** das Bestimmen für jeden Merkmalspunkt der identifizierten Vielzahl an Merkmalspunkten auf dem ersten Bild, eines passenden Merkmalspunktes auf dem zweiten Bild, der dem Merkmalspunkt der identifizierten Vielzahl an Merkmalspunkten auf dem ersten Bild entspricht, Folgendes umfasst:

   Bestimmen für jeden Merkmalspunkt in der identifizierten Vielzahl von Merkmalspunkten auf dem ersten Bild und gemäß Richtungsinformationen über das erste Bild und das zweite Bild eines vorab übereinstimmenden Merkmalspunktes auf dem zweiten Bild, der dem Merkmalspunkt der identifizierten Vielzahl an Merkmalspunkte auf dem ersten Bild (S131) entspricht;
   Anpassen des zweiten Bildes an ein voreingestelltes zweites Gitter (S132); und
   Bestimmen, für jeden Voranpassungsmerkmalspunkt, eines Zentrums einer Gitterzelle des zweiten Gitters, in dem sich der Voranpassungsmerkmalspunkt als entsprechender übereinstimmender Merkmalspunkt befindet (S133).

3. Verfahren nach Anspruch 2, **dadurch gekennzeichnet, dass** das Berechnen einer Vielzahl von Werten, die Ähnlichkeiten zwischen der Vielzahl von Merkmalspunkten und den entsprechenden übereinstimmenden Merkmalspunkten darstellen, umfasst:

   Bestimmen von Farbwerten aller Pixel innerhalb der Gitterzellen des ersten Gitters, in denen sich die identifizierten mehreren Merkmalspunkte befinden (S141);

Bestimmen von Farbwerten aller Pixel innerhalb der Gitterzellen des zweiten Gitters, in denen sich die bestimmten übereinstimmenden Merkmalspunkte befinden (S142); und

Berechnen, für jeden Merkmalspunkt in der identifizierten Vielzahl von Merkmalspunkten auf dem ersten Bild, eines durchschnittlichen Farbwertfehlers zwischen i) allen Pixeln in der Gitterzelle des ersten Gitters, in dem sich der Merkmalspunkt in der identifizierten Vielzahl von Merkmalspunkten befindet, für jeden Merkmalspunkt in der identifizierten Vielzahl von Merkmalspunkten auf dem ersten Bild und ii) allen Pixeln innerhalb der Gitterzelle des zweiten Gitters, in denen sich der übereinstimmende Merkmalspunkt befindet, der dem Merkmalspunkt in der identifizierten Vielzahl von Merkmalspunkten entspricht; und

Bestimmen, gemäß den durchschnittlichen Farbwertfehlern, der Vielzahl von Werten, die Ähnlichkeiten zwischen der Vielzahl von Merkmalspunkten und den entsprechenden übereinstimmenden Merkmalspunkten (S143) darstellen.

**4.** Verfahren nach Anspruch 3, **dadurch gekennzeichnet, dass** eine Formel zum Durchführen einer gewichteten Berechnung eines Tiefenwerts eines Merkmalspunkts in der identifizierten Vielzahl von Merkmalspunkten gemäß der Vielzahl von Werten, die Ähnlichkeiten zwischen der Vielzahl von Merkmalspunkten und den entsprechenden übereinstimmenden Merkmalspunkten darstellen, umfasst:

$$\text{gewichteter Tiefenwert} = \text{Tiefenwert} \times (\text{Summe der durchschnittlichen Farbwertfehler aller Merkmalspunkte mit Ausnahme des Merkmalspunkts, der der gewichteten Berechnung unterzogen werden soll/Summe der durchschnittlichen Farbwertfehler aller Merkmalspunkte}).$$

**5.** Verfahren nach einem der Ansprüche 2 bis 4, **gekennzeichnet dadurch, dass** die Fläche der Gitterzellen des zweiten Gitters kleiner ist als die Fläche der Gitterzellen des ersten Gitters.

**6.** Verfahren nach Anspruch 1, **dadurch gekennzeichnet, dass** das Verfahren ferner Folgendes umfasst:
vor dem Durchführen der gewichteten Berechnung der Tiefenwerte der Vielzahl von Merkmalspunkten werden ein oder mehrere Merkmalspunkte in der Vielzahl von Merkmalspunkten gemäß den Ähnlichkeiten zwischen der Vielzahl von Merkmalspunkten und den entsprechenden übereinstimmenden Merkmalspunkten verworfen.

**7.** Verfahren nach Anspruch 6, **dadurch gekennzeichnet, dass** das Verwerfen eines oder mehrerer Merkmalspunkte in der Vielzahl von Merkmalspunkten gemäß den Ähnlichkeiten zwischen der Vielzahl von Merkmalspunkten und den entsprechenden übereinstimmenden Merkmalspunkten umfasst:

Bestimmen eines Verwerfungs-Schwellenwerts gemäß den Ähnlichkeiten zwischen der Vielzahl von Merkmalspunkten und den entsprechenden übereinstimmenden Merkmalspunkten; und
Verwerfen von Merkmalspunkten aus der Vielzahl von Merkmalspunkten, deren Ähnlichkeiten mit den entsprechenden übereinstimmenden Merkmalspunkten kleiner als der Verwerfungs-Schwellenwert sind.

**8.** Verfahren nach Anspruch 1, **dadurch gekennzeichnet, dass** das Verfahren ein Dreiecksgitter annimmt.

**9.** Verfahren nach Anspruch 1, wobei das Verfahren auf einem mobilen Gerät wie einem Mobiltelefon implementiert ist.

**10.** Vorrichtung zum Erzeugen eines dreidimensionalen Modells eines Objekts, **gekennzeichnet dadurch, dass** die Vorrichtung mehrere Module umfasst, die dafür konfiguriert sind, das Verfahren nach einem der Ansprüche 1 bis 9 durchzuführen.

**Revendications**

**1.** Procédé de génération d'un modèle tridimensionnel d'un objet, **caractérisé en ce que** le procédé comprend :

la capture respective d'une première image d'un objet (S11) à partir d'une première direction et d'une seconde image de l'objet (S11) à partir d'une seconde direction ;

l'identification d'une pluralité de points caractéristiques sur la première image (S12), dans lequel l'identification de la pluralité de points caractéristiques comprend

l'identification de multiples points caractéristiques initiaux sur la première image (S121),

l'association de la première image à une première grille prédéfinie comprenant de multiples cellules de grille (S 122),

le calcul de distances entre les multiples points caractéristiques initiaux identifiés et les centres des cellules de grille de la première grille dans lesquelles se situent les points caractéristiques initiaux, et

la détermination, dans chacune des cellules de grille de la première grille, d'un point caractéristique initial le plus proche du centre d'une cellule de grille dans laquelle le point caractéristique initial est situé en tant que point caractéristique, dans lequel si une cellule de grille de la première grille est dépourvue d'un point caractéristique initial, le centre de la cellule de grille est déterminé comme point caractéristique à l'intérieur de la cellule de grille ;

la détermination, pour chaque point caractéristique dans la pluralité identifiée de points caractéristiques sur la première image, d'un point caractéristique concordant sur la seconde image qui correspond au point caractéristique dans la pluralité identifiée de points caractéristiques sur la première image (S13) ;

le calcul d'une pluralité de valeurs représentant des similitudes entre la pluralité de points caractéristiques et les points caractéristiques concordants correspondants, dans lequel chaque valeur dans la pluralité de valeurs calculées représente une similitude entre i) un point caractéristique respectif dans la pluralité identifiée de points caractéristiques sur la première image et ii) un point caractéristique concordant sur la seconde image qui correspond au point caractéristique respectif ;

le calcul, pour chaque point caractéristique dans la pluralité identifiée de points caractéristiques sur la première image, d'une valeur de profondeur du point caractéristique par rapport à un plan de visualisation, dans lequel le calcul d'une valeur de profondeur d'un point caractéristique comprend la combinaison de valeurs de profondeur du point caractéristique au niveau d'un angle d'élévation, d'un angle de déflexion et d'un angle de rotation (S14) ;

le fait d'effectuer des calculs pondérés sur les valeurs de profondeur de la pluralité de points caractéristiques selon la pluralité de valeurs représentant des similitudes entre la pluralité de points caractéristiques et les points caractéristiques concordants correspondants (S15), dans lequel le fait d'effectuer des calculs pondérés sur les valeurs de profondeur de la pluralité de points caractéristiques comprend le calcul, pour chacun de la pluralité de points caractéristiques, d'une valeur de profondeur pondérée, dans lequel la valeur de profondeur pondérée comprend la valeur de profondeur calculée du point caractéristique, multipliée par une somme de valeurs représentant des similitudes de tous les points caractéristiques dans la pluralité de points caractéristiques à part le point caractéristique, et divisée par une somme de valeurs représentant des similitudes de tous les points caractéristiques ; et

la génération d'un modèle tridimensionnel de l'objet sur la base des valeurs de profondeur pondérées calculées de la pluralité de points caractéristiques (S16).

2. Procédé selon la revendication 1, **caractérisé en ce que** pour chaque point caractéristique de la pluralité identifiée de points caractéristiques sur la première image, la détermination d'un point caractéristique concordant sur la seconde image qui correspond au point caractéristique dans la pluralité identifiée de points caractéristiques sur la première image comprend :

la détermination, pour chaque point caractéristique dans la pluralité identifiée de points caractéristiques sur la première image, et selon des informations de direction concernant la première image et la seconde image, d'un point caractéristique pré-concordant sur la seconde image qui correspond au point caractéristique dans la pluralité identifiée de points caractéristiques sur la première image (S131) ;

la concordance de la seconde image avec une seconde grille prédéfinie (S132) ; et

la détermination, pour chaque point caractéristique pré-concordant, d'un centre d'une cellule de grille de la seconde grille où le point caractéristique pré-concordant est situé en tant que point caractéristique concordant correspondant (S133).

3. Procédé selon la revendication 2, **caractérisé en ce que** le calcul d'une pluralité de valeurs représentant des similitudes entre la pluralité de points caractéristiques et les points caractéristiques concordants correspondants comprend :

la détermination de valeurs de couleur de tous les pixels à l'intérieur des cellules de grille de la première grille où se situent la pluralité identifiée de points caractéristiques (S141) ;

la détermination de valeurs de couleur de tous les pixels à l'intérieur des cellules de grille de la seconde grille où se situent les points caractéristiques concordants déterminés (S 142) ; et

le calcul, pour chaque point caractéristique dans la pluralité identifiée de points caractéristiques sur la première image, d'une erreur de valeur de couleur moyenne entre i) tous les pixels à l'intérieur de la cellule de grille de la première grille où se situe le point caractéristique dans la pluralité identifiée de points caractéristiques et ii) tous les pixels à l'intérieur de la cellule de grille de la seconde grille où se situe le point caractéristique concordant qui correspond au point caractéristique dans la pluralité identifiée de points caractéristiques ; et

la détermination, selon les erreurs de valeur de couleur moyenne, de la pluralité de valeurs représentant des similitudes entre la pluralité de points caractéristiques et les points caractéristiques concordants correspondants (S143).

4. Procédé selon la revendication 3, **caractérisé en ce qu'**une formule pour effectuer un calcul pondéré sur une valeur de profondeur d'un point caractéristique dans la pluralité identifiée de points caractéristiques selon la pluralité de valeurs représentant des similitudes entre la pluralité de points caractéristiques et les points caractéristiques concordants correspondants comprend :

$$\text{valeur de profondeur pondérée} = \text{valeur de profondeur} \times (\text{somme des erreurs de valeur de couleur moyenne de tous les points caractéristiques à l'exception du point caractéristique à soumettre au calcul pondéré/somme des erreurs de valeur de couleur moyenne de tous les points caractéristiques}).$$

5. Procédé selon l'une quelconque des revendications 2 à 4, **caractérisé en ce que** l'aire des cellules de grille de la seconde grille est inférieure à l'aire des cellules de grille de la première grille.

6. Procédé selon la revendication 1, **caractérisé en ce que** le procédé comprend en outre :
avant d'effectuer le calcul pondéré sur les valeurs de profondeur de la pluralité de points caractéristiques, l'élimination d'un ou de plusieurs points caractéristiques dans la pluralité de points caractéristiques selon les similitudes entre la pluralité de points caractéristiques et des points caractéristiques concordants correspondants.

7. Procédé selon la revendication 6, **caractérisé en ce que** l'élimination d'un ou de plusieurs points caractéristiques dans la pluralité de points caractéristiques selon les similitudes entre la pluralité de points caractéristiques et les points caractéristiques concordants correspondants comprend :

la détermination d'un seuil d'élimination selon des similitudes entre la pluralité de points caractéristiques et les points caractéristiques concordants correspondants ; et

l'élimination, de la pluralité de points caractéristiques, de points caractéristiques dont les similitudes avec les points caractéristiques concordants correspondants sont inférieures au seuil d'élimination.

8. Procédé selon la revendication 1, **caractérisé en ce que** le procédé adopte une grille triangulaire.

9. Procédé selon la revendication 1, dans lequel le procédé est mis en œuvre sur un dispositif mobile tel qu'un téléphone mobile.

10. Appareil de génération d'un modèle tridimensionnel d'un objet, **caractérisé en ce que** l'appareil comprend de multiples modules configurés pour effectuer le procédé de l'une quelconque des revendications 1 à 9.

S11

Respectively capturing a first image in a first direction and a second image in a second direction of an object

S12

Acquiring a plurality of feature points on the first image

S13

Determining matching feature points on the second image that correspond to the plurality of feature points

S14

Calculating similarities between the plurality of feature points and the corresponding matching feature points, and depth values of the plurality of feature points

S15

Performing weighted calculation on the depth values of the plurality of feature points according to the similarities between the plurality of feature points and the corresponding matching feature points

S16

Performing three-dimensional modeling on the object based on the depth values of the plurality of feature points after being subjected to the weighted calculation

*Fig. 1*

S121

Acquiring several initial feature points on the first image

S122

Matching the first image with a pre-set first grid

S123

Screening the several initial feature points until the numbers of initial feature points retained in grid cells of the first grid are equal, and determining them as the feature points

*Fig. 2*

S131

Determining, according to direction information about the first image and the second image, pre-matching feature points on the second image that correspond to the plurality of feature points

S132

Matching the second image with a pre-set second grid

S133

Determining centers of grid cells of the second grid where the pre-matching feature points are located as the corresponding matching feature points

*Fig. 3*

S141

Acquiring color values of all pixels within the grid cells of the first grid where the plurality of feature points are located

S142

Acquiring color values of all pixels within the grid cells of the second grid where the plurality of matching feature points are located

S143

Respectively calculating average color value errors between all the pixels within the grid cells of the first grid where the plurality of feature points are located and those within the grid cells of the second grid where the corresponding matching feature points are located, and determining, according to the average color value errors, the similarities between the plurality of feature points and the corresponding matching feature points

*Fig. 4*

*Fig. 5*

*Fig. 6*

*Fig. 7*

First image

*Fig. 8*

First grid

Acquiring
feature
points

First grid

*Fig. 9*

Fig. 10

S21

Capturing images of an object in a plurality of directions

S22

Acquiring a plurality of feature points on one of the plurality of images

S23

Respectively determining matching feature points on the remaining images that correspond to the plurality of feature points

S24

Respectively calculating similarities between the plurality of feature points and the corresponding matching feature points on the remaining images, and depth values of the matching feature points

S25

Calculating depth values of the plurality of feature points according to direction information about the plurality of images and the depth values of the matching feature points

S26

Performing weighted calculation on the depth values of the plurality of feature points according to the similarities between the plurality of feature points and the corresponding matching feature points on the remaining images

S27

Performing three-dimensional modeling on the object based on the depth values of the plurality of feature points after being subjected to the weighted calculation

*Fig. 11*

Front face image

Front face left-inclined image

Front face right-inclined image

Front face elevated image

*Fig. 12*

32

31

33    34    35    36

| mage capture module | Feature detection module | Calcu-lation unit | Match-ing module | Calcul-ation module | Screen-ing module | Model genera-tion module |

321

*Fig. 13*

**EP 3 273 412 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201510117117
- US 2013100256 A1
- EP 1510973 A2
- WO 2014186970 A1